# FASCICULE DE BREVET EUROPEEN

(11) **EP 0 434 514 B1**
(45) Date de publication et mention de la délivrance du brevet: **18.08.1993**
(21) Numéro de dépôt: 90403582.1
(22) Date de dépôt: 13.12.1990
(51) Int. Cl.: B60T 13/563, B60T 13/565, B60T 8/40

(54) **Ensemble d'un servomoteur double d'assistance au freinage et d'un maître cylindre**
Tandembremskraftverstärker und Hauptzylinderaufbau
Tandem brake servo and master cylinder assembly

(30) Priorité: 22.12.1989 FR 8917043
(43) Date de publication de la demande: 26.06.1991
(73) Titulaire: ALLIEDSIGNAL EUROPE SERVICES TECHNIQUES, 93700 Drancy (FR)
(72) Inventeur: Gautier, Jean Pierre, Bendix Europe Services Tech., F-93700 Drancy (FR); Verbo, Pedro, Bendix Europe Services Tech., F-93700 Drancy (FR)
(74) Mandataire: Bentz, Jean-Paul

(56) Documents cités:
- FR-A- 1 505 226
- US-A- 4 632 208

## Description

La présente invention concerne les ensembles émetteurs de pression pour des circuits hydrauliques de freinage, utilisés à bord des véhicules automobiles, et plus particulièrement ceux qui sont constitués d'un servomoteur double, ou encore appelé tandem, et d'un maître cylindre.

De tels ensembles sont bien connus dans la technique du freinage. De façon classique, le servomoteur double comporte dans une enveloppe extérieure une cloison fixe délimitant à l'intérieur de cette enveloppe un volume avant et un volume arrière, chaque volume étant divisé de façon étanche en une chambre avant et une chambre arrière par une cloison mobile, au moins un moyen élastique tendant à déplacer une cloison mobile vers l'arrière, au moins un passage reliant les deux chambres avant et au moins un passage reliant les deux chambres arrière, une différence de pression étant établie entre les chambres avant et arrière du volume arrière par un moyen de valve lors de l'actionnement d'une tige de commande pour actionner une tige de sortie. Cette tige de sortie actionne à son tour le piston d'un maître cylindre, ce qui provoque une élévation de pression dans au moins un circuit hydraulique de freinage.

De tels ensembles sont disposés de façon classique dans le compartiment moteur du véhicule, où la place disponible se réduit de plus en plus à mesure que les constructeurs veulent disposer de plus en plus d'accessoires tout en respectant l'aérodynamisme du capot moteur.

Les constructeurs ont donc tendance à vouloir intégrer différents systèmes en un seul, tout en respectant évidemment les normes de sécurité.

Il existe d'autre part diverses situations où il est désirable d'engendrer un accroissement de pression dans le circuit de freinage indépendamment de la volonté du conducteur du véhicule, comme par exemple pour empêcher les roues de patiner au démarrage, pour faire fonction d'antivol, pour les démarrages en côte, etc...

Les systèmes connus d'antipatinage au démarrage comportent des capteurs de la vitesse des roues motrices reliés à un calculateur. Lorsque le calculateur détecte une tendance des roues au patinage, une technique connue consiste à commander le freinage des roues motrices comme FR-A-2 513 201. Cette dernière solution conduit à des réalisations extrêmement complexes, fragiles, encombrantes et onéreuses. De plus, lors des périodes de fonctionnement en antipatinage, l'actionnement des freins entraîne un enfoncement de la pédale de frein, ce qui peut surprendre le conducteur car, s'il désire freiner pendant ces périodes, son pied ne trouvera pas la pédale de frein à sa place habituelle.

Les systèmes connus d'antivol agissent sur divers organes de commande ou de manoeuvre du véhicule, et sont à chaque fois des éléments ajoutés dans le compartiment moteur. Certains actionnent les freins si le véhicule est occupé par un conducteur non autorisé, et sont là encore des systèmes complexes, encombrants et onéreux.

Pour apporter une aide à la conduite, les constructeurs développent également des systèmes d'assistance au démarrage en côte. Ces systèmes maintiennent l'application des freins tant que la pédale d'accélérateur n'est pas actionnée. Ces systèmes viennent encore se surajouter aux précédents et présentent les mêmes inconvénients.

La présente invention a donc pour objet un ensemble d'un servomoteur double d'assistance au freinage et d'un maître cylindre qui permette d'assurer une fonction de freinage sans que le conducteur agisse sur la pédale de frein, sans réaction sur cette pédale, qui soit de conception simple, robuste, fiable et compacte.

Conformément à l'invention, ce résultat est obtenu au moyen d'un ensemble du type rappelé plus haut, dans lequel les cloisons mobiles avant et arrière sont indépendantes l'une de l'autre, et dans lequel le passage reliant les deux chambres avant est réalisé dans un prolongement cylindrique du piston du maître-cylindre. Dans un mode de réalisation préféré, ce prolongement cylindrique assure l'étanchéité entre la chambre arrière du volume avant et la chambre avant du volume arrière. De façon avantageuse, des moyens sont prévus pour établir une différence de pression entre la chambre arrière du volume avant et la chambre arrière du volume arrière. De préférence, ces moyens sont constitués par une électrovanne disposée dans le passage reliant les deux chambres arrière.

Grâce à cet agencement, les pressions dans les chambres arrière peuvent être différentes, et donc les cloisons mobiles peuvent avoir des mouvements différents, le mouvement de la seule cloison mobile avant n'impliquant pas le mouvement de la tige de commande du servomoteur. De plus, la communication entre les chambres avant et l'étanchéité entre les deux volumes étant assurées par le prolongement cylindrique du piston du maître cylindre, cette disposition permet de rendre l'ensemble sevomoteur-maître cylindre compact.

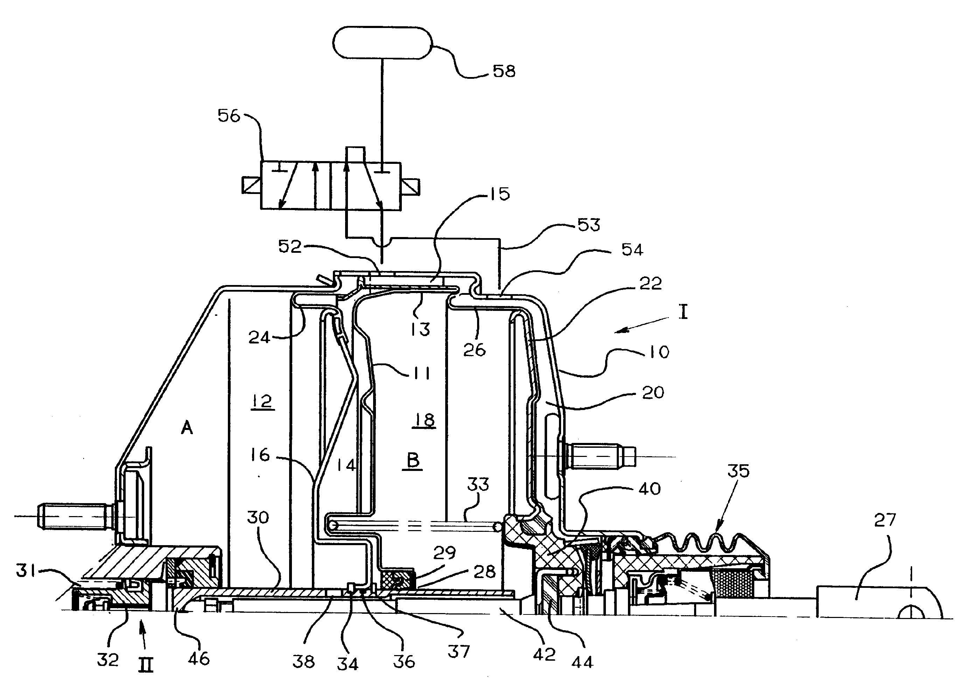

L'invention sera mieux comprise, et d'autres buts, avantages et caractéristiques de celle-ci apparaîtront plus clairement à la lecture de la description qui suit d'un mode préféré de réalisation donné à titre d'exemple non limitatif en référence au dessin sur lequel la Figure unique représente schématiquement en demi-coupe un ensemble d'un servomoteur double d'assistance au freinage et d'un maître cylindre réalisé conformément à la présente invention.

En référence à la Figure unique, l'ensemble représenté comporte un servomoteur I associé à un maître cylindre II.

Le servomoteur double I comporte de façon classique une enveloppe extérieure 10, dont l'intérieur est divisé par une cloison fixe 11 en un volume avant A et un volume arrière B.

Par convention, on appelle "avant" la direction dans laquelle les pièces se déplacent lorsqu'elles sont actionnées et "arrière" la direction dans laquelle les pièces se déplacent pour revenir à leur position de repos. Ainsi, sur la Figure, l'avant est situé à gauche et l'arrière est situé à droite.

Le volume avant A est divisé en une chambre avant 12 et une chambre arrière 14 par une paroi mobile 16. De même, le volume arrière B est divisé en une chambre avant 18 et une chambre arrière 20 par une paroi mobile 22. Chaque paroi mobile 16,22 est pourvue d'une membrane 24,26 respectivement dont le bord périphérique extérieur est fixé de façon étanche à l'enveloppe extérieure 10 pour séparer de façon étanche les chambres avant 12,18 des chambres arrière 14,20 de chaque volume.

De façon classique, les chambres avant de chaque volume communiquent entre elles, et sont reliées à une source de dépression. De façon également classique, la cloison fixe 11 comporte un prolongement cylindrique 13 permettant de définir avec l'enveloppe extérieure 10 une chambre annulaire périphérique 15 mettant en communication les deux chambres arrière 14 et 20 grâce à des encoches ou ouvertures pratiquées dans le bourrelet périphérique extérieur de la membrane 26, la chambre arrière 14 communiquant avec la chambre annulaire 15. Lors de l'actionnement de la tige d'entrée 27 reliée à la pédale de frein (non représentée), des moyens de valve 35 interrompent la communication entre les chambres avant et les chambres arrière et laissent pénétrer de l'air à la pression atmosphérique dans les chambres arrière 14 et 20, ce qui provoque une différence de pression sur les parois mobiles 16 et 22 qui avancent alors à l'encontre de l'action du ressort de rappel 31 et procurent l'assistance recherchée dans l'actionnement du maître cylindre II.

Conformément à l'invention, lorsqu'il est souhaitable d'actionner les freins du véhicule sans que cet actionnement provienne de l'enfoncement de la pédale de frein, et sans que cet actionnement provoque cet enfoncement de la pédale de frein, et ce pour assurer par exemple les fonctions d'antipatinage au démarrage, d'antivol ou d'aide au démarrage en côte, il est prévu de rendre les cloisons mobiles avant 16 et arrière 22 indépendantes l'une de l'autre.

Dans le mode de réalisation représenté sur la Figure, la cloison fixe 11 comporte une ouverture centrale 28 dans laquelle coulisse de façon étanche grâce à un joint 29 un prolongement cylindrique 30 du piston 32 du maître cylindre II. La cloison mobile 16 est fixée de façon étanche sur le prolongement 30 grâce à deux bagues de blocage 34,37 et un joint 36. Du fait du coulissement étanche du prolongement 30 dans la paroi fixe 11, et du fait que la cloison mobile du volume avant A soit solidaire du prolongement cylindrique 30 du piston 32, ce prolongement 30 assure également la séparation entre la chambre arrière 14 du volume avant A et la chambre avant 18 du volume arrière B. De ce fait, de façon avantageuse grâce à l'invention, le passage reliant les deux chambres avant 12 et 18 est réalisé de façon très simple par une ouverture 38 pratiquée dans le prolongement cylindrique 30, mettant en communication la chambre 12 avec l'intérieur de ce prolongement 30 qui débouche lui-même dans la chambre 18.

La cloison mobile 22 du volume arrière est classique et constitue la jupe du piston 40 actionné par le moyen de valve 35, et actionnant une tige de sortie 42 par l'intermédiaire d'un disque de réaction 44. La tige de sortie 42 pénètre avec jeu dans le prolongement cylindrique 30 et, dans la position de repos représentée, vient en butée contre le fond 46 du prolongement 30.

La cloison mobile arrière 22 est rappelée en position de repos par un ressort 33 qui prend appui sur la face arrière de la cloison fixe 11. De façon avantageuse grâce à l'invention, il n'est pas nécessaire de prévoir de ressort de rappel pour la cloison mobile avant 16 puisque celle-ci, étant solidaire du prolongement cylindrique arrière 30 du piston 32 du maître cylindre II, est déjà rappelée en position de repos par le ressort de rappel 31 du piston 32.

La tige de sortie 42 venant en butée contre le fond 46 du prolongement 30, l'actionnement du servomoteur I par la tige d'entrée 27 entraîne le mouvement simultané des cloisons mobiles 22 et 16 et l'actionnement du maître cylindre II, de façon identique à celle d'un servomoteur double classique.

Par contre, lorsque l'on désire qu'une action de freinage se produise sans qu'il y ait intervention sur la tige d'entrée 27, grâce au jeu existant entre la tige 42 et la partie cylindrique 30, l'avancée de la paroi mobile avant 16 permettra l'actionnement du piston 32 du maître cylindre, sans être transmise à la tige 42, et donc à la tige 27.

Conformément à l'invention, l'avancée de la seule paroi mobile avant 16 est réalisée de la façon suivante. Le bourrelet périphérique extérieur de la membrane 26 est réalisé de façon continue, c'est à dire qu'il est exempt de toute ouverture ou encoche traditionnelle. Dans ces conditions, les chambres arrière 14 et 20 ne peuvent plus communiquer par l'intermédiaire de la chambre annulaire 15. Suivant l'invention, le passage reliant les deux chambres arrière est obtenu par une communication 53 établie entre une ouverture 52 réalisée dans l'enveloppe extérieure 10 et débouchant dans la chambre annulaire 15, qui communique avec la chambre arrière 14, et une ouverture 54 réalisée elle aussi dans l'enveloppe extérieure 10 et débouchant dans la chambre arrière 20.

Dans la communication 53 entre ces ouvertures 52 et 54 est intercalée une électrovanne à trois voies et deux positions 56. Dans la position de repos représentée, l'électrovanne 56 permet la communication entre les deux chambres arrière 14 et 20, et donc un fonctionnement classique du servomoteur comme décrit précédemment.

Par contre, lorsqu'une action de freinage est désirée indépendamment de la volonté du conducteur, un calculateur (non représenté) commande le passage de l'électrovanne 56 dans sa deuxième position, dans laquelle la communication entre les chambres arrière 14 et 20 est interrompue, et dans laquelle la chambre arrière 14 du volume avant est reliée à une source d'air à la pression atmosphérique 58. Une pression réduite régnant en permanence dans la chambre avant 12, la paroi mobile 16 est soumise à une pression différentielle qui la fait avancer, ainsi que le piston 32 du maître cylindre, ce qui provoque l'action de freinage requise, cependant que le jeu existant entre le prolongement cylindrique 30 et la tige 42 permet à cette dernière de ne pas être entraînée dans ce mouvement, pas plus que la tige 27.

On a ainsi réalisé de façon simple un ensemble constituée d'un servomoteur double d'assistance au freinage et d'un maître cylindre, capable de produire une action de freinage indépendamment d'un appui sur la pédale de frein, et sans entraîner cette pédale de frein, et pouvant être utilisé pour différentes fonctions telles que l'antipatinage au démarrage, l'antivol et l'aide au démarrage en côte.

En outre, on pourra utiliser de l'air ou un autre gaz sous pression au lieu de la pression atmosphérique. De même, les volumes avant et arrière peuvent ne pas avoir le même diamètre.

## Revendications

1. Ensemble d'un servomoteur double d'assistance au freinage et d'un maître cylindre, ce dernier étant susceptible d'être actionné par un piston (32), le servomoteur comportant dans une enveloppe extérieure (10) une cloison fixe (11) délimitant à l'intérieur de l'enveloppe (10) un volume avant (A) et un volume arrière (B), ces volumes (A,B) étant tous deux divisés de façon étanche en des chambres avant (12, 18) et arrière (14, 20) respectives par des première et seconde cloisons mobiles respectives (16, 22), des premier et second organes de poussée (30, 42) propres à agir sur le maître-cylindre, respectivement solidaires desdites cloisons mobiles et accouplés pour permettre au premier organe de poussée de se déplacer seul ou d'être poussé par le second, au moins un moyen élastique (31) tendant à déplacer une (16) des cloisons mobiles (16, 22) vers l'arrière, au moins un premier passage (38) reliant les deux chambres avant (12, 18), au moins un second passage (53) reliant les deux chambres arrière (14, 20), une différence de pression étant susceptible d'être établie entre les chambres avant (18) et arrière (20) par un premier moyen de valve (35) lors de l'actionnement d'une tige de commande (27) pour provoquer un déplacement des cloisons mobiles, un second moyen de valve étant interposé sur le second passage pour interrompre sélectivement la communication entre les chambres arrière, raccorder la chambre arrière du volume avant à une source de pression (58), et permettre corrélativement le déplacement du premier organe de poussée sans le second, caractérisé en ce que ce premier organe de poussée (30) est constitué par une partie cylindrique creuse du piston du maître-cylindre (32), dans laquelle est engagé le second organe de poussée (42), ce piston coulissant de façon étanche dans un orifice (28) traversant la cloison fixe (11), et s'ouvrant dans les deux chambres avant (12, 18) pour assurer ledit premier passage.

2. Ensemble selon la revendication 1, caractérisé en ce que le moyen élastique tendant à déplacer vers l'arrière la cloison mobile du volume avant est situé dans le maître-cylindre.

## Patentansprüche

1. Einheit aus einem doppelten Bremskraftverstärker und einem Hauptzylinder, wobei letzterer durch einen Kolben (32) betätigt werden kann, und wobei der Bremskraftverstärker in einem äußeren Gehäuse (10) eine feste Trennwand (11) enthält, die im Inneren des Gehäuses (10) ein vorderes Volumen (A) und ein hinteres Volumen (B) abteilt, und diese Volumen (A, B) beide in luftdichter Weise in vordere (12, 18) und hintere (14, 10) Kammern unterteilt sind durch eine erste bzw. eine zweite bewegliche Trennwand (16, 22), sowie ein erstes und ein zweites Schuborgan (30, 42), welche geeignet sind, auf den Hauptzylinder einzuwirken, jeweils mit einer der beweglichen Trennwände fest verbunden sind und miteinander so gekoppeltsind, daß das erste Schuborgan sich allein- oder von dem zweiten verschoben werden kann, mindestens ein Federmittel (31), welches eine (16) der beweglichen Trennwände (16, 22) nach hinten zu verschieben versucht, mindestens einen ersten Durchgang (38), der die beiden vorderen Kammern (12, 18) miteinander verbindet, mindestens einen zweiten Durchgang (53), der die beiden hinteren Kammern (14, 20) miteinander verbindet, wobei zwischen der vorderen Kammer (18) und der hinteren Kammer (20) bei Betätigung einer Steuerstange (27) mittels eines ersten Ventilmittels (35) eine Druckdifferenz aufbaubar ist, die eine Verschiebung der beweglichen Trennwände bewirkt, wobei ein zweites Ventilmittel in den zweiten Durchgang eingesetzt ist, um selektiv die Verbindung zwischen den hinteren Kammern zu unterbrechen, die hintere Kammer des vorderen Volumens mit einer Druckquelle (58) zu verbinden und demzufolge die Verstellung des ersten Schubelements ohne das zweite zu ermöglichen, dadurch gekennzeichnet, daß das erste Schubelement (30) durch einen hohlen zylindrischen Abschnitt des Kolbens des Hauptzylinders (32) gebildet ist, in dem das zweite Schuborgan (42) eingesetzt ist, wobei dieser Kolben luftdicht in einer Öffnung (28) gleitet, die durch die feste Trennwand (11) hindurchgeht und sich in die beiden vorderen Kammern (12, 18) öffnet, um den ersten Durchgang zu bewirken.

2. Einheit gemäß Anspruch 1, dadurch gekennzeichnet, daß das Federmittel, welches versucht, die bewegliche Trennwand des vorderen Volumens nach hinten zu verschieben, im Hauptzylinder angebracht ist.

## Claims

1. Double brake-booster and master cylinder assembly, the latter cylinder being capable of being actuated by a piston (32), the booster comprising, in an outer casing (10), a fixed partition (11) defining, inside the casing (10), a front space (A) and a rear space (B), these spaces (A, B) both being divided in a sealed manner into front chambers (12, 18) and rear chambers (14, 20) respectively, by first and second movable partitions (16, 22) respectively, first and second thrust members (30, 42) suitable for acting on the master cylinder, respectively integral with said movable partitions and coupled together in order to allow the first thrust member to move alone or to be thrust by the second, at least one elastic means (31) tending to displace one (16) of the movable partitions (16, 22) rearward, at least one first passage (38) connecting the two front chambers (12, 18), at least one second passage (53) connecting the two rear chambers (14, 20), a pressure difference being capable of being established between the front (18) and rear (20) chambers by a first valve means (35) on actuation of a control rod (27) in order to bring about a displacement of the movable partitions, a second valve means being interposed in the second passage in order to cut off the communication between the rear chambers when required, connect the rear chamber of the front space to a pressure source (58), and accordingly to allow the displacement of the first thrust member without the second, characterized in that this first thrust member (30) consists of a hollow cylindrical part of the piston of the master cylinder (32), in which the second thrust member (42) is engaged, this piston sliding, in a sealed manner, in an orifice (28) passing through the fixed partition (11) and opening out into the two front chambers (12, 18) in order to provide said first passage.

2. Assembly according to Claim 1, characterized in that the elastic means tending to displace the movable partition of the front space rearward is located in the master cylinder.
